# EUROPEAN PATENT SPECIFICATION

(11) **EP 3 566 004 B1**
(45) Date of publication and mention of the grant of the patent: **27.05.2020**
(21) Application number: 17811619.0
(22) Date of filing: 14.12.2017
(51) Int. Cl.: F21V 23/04, H05B 37/02, F21K 9/237, F21V 33/00, G08B 13/193, G08B 15/00, F21K 9/272

(54) **CAMERA SENSOR HIDDEN BEHIND LUMINAIRE OPTICS**
HINTER LEUCHTENOPTIK VERBORGENER KAMERASENSOR
CAPTEUR DE CAMÉRA CACHÉ DERRIÈRE UNE OPTIQUE DE LUMINAIRE

(30) Priority: 03.01.2017 EP 17150181
(43) Date of publication of application: 13.11.2019
(73) Proprietor: Signify Holding B.V., 5656 AE Eindhoven (NL)
(72) Inventor: VISSENBERG, Michel, Cornelis, Josephus, Marie, 5656 AE Eindhoven (NL); IJZERMAN, Willem, Lubertus, 5656 AE Eindhoven (NL)
(74) Representative: Verweij, Petronella Daniëlle
(86) International application number: PCT/EP2017/082884
(87) International publication number: WO 2018/127377

(56) References cited:
- US-A- 5 886 821
- US-A1- 2009 212 709
- US-A1- 2014 254 026

## Description

### FIELD OF THE INVENTION

The invention relates to a sensor unit and a sensor system comprising such sensor unit. The invention further relates to a lighting system comprising such sensor unit or sensor system. Yet further, the invention also relates to a method of e.g. sensing motion.

### BACKGROUND OF THE INVENTION

Security cameras in combination with lighting fixtures are known in the art. US 8,622,561 B2, for instance, describes a luminaire, comprising a housing having an outer surface, a cover extending a height above the outer surface, and a camera concealed within the cover. This document also describes a luminaire, comprising a housing made of first and second portions having respective first and second outer surfaces, wherein the first outer surface extends a height substantially above the second outer surface, and a camera concealed within the first portion. Further, this document describes a luminaire, comprising a housing including first and second portions having respective first and second outer surfaces, wherein the first outer surface extends a height substantially above the second outer surface, and a privacy film disposed on the first surface, and a camera concealed within the first portion. The privacy film can reduce the visibility within at least the visible portion of the electromagnetic spectrum through generally transparent materials. The privacy film can be silvered, thereby offering an unimpeded view from the low-light side but virtually no view from the high-light side. The privacy film can be made by frosting transparent materials. This can transform the material to translucent. There are a number of privacy film gradients that can be lighter or darker. Further, the privacy film can include material having a plurality of small holes referred to a perforated film. Such perforations are designed to allow the graphic to be seen from the outside, whilst allowing people to see out from the inside. Here, we refer to the variety of privacy films generally as a tint, silvered, mirrored or a perforated film and the like. The camera tracks and records a target.

### SUMMARY OF THE INVENTION

PIR (passive infrared) sensors may be used in presence detectors for lighting systems. A low number of infrared sensors (typically four) is combined with an (IR light transparent) lens array. Depending on the position of a person with respect to the PIR sensor, the emitted IR light by that person will be focused on one of the sensors. If the person moves, the light will be focused on another sensor. The difference signal triggers a motion detection signal. A disadvantage of PIR sensors is the low resolution: a lens array is needed to create a repeating virtual pattern of the small cluster of sensors such that a certain area may be covered. The lens array design must be specifically tuned to the application height and detection area, otherwise gaps may occur in the virtual sensor array where no movement can be detected or the virtual sensor images overlap, which reduces the sensitivity of the array. Thus every application requires a different PIR sensor design, or a complete other solution.

Hence, it is an aspect of the invention to provide an alternative sensor, which preferably further at least partly obviates one or more of above-described drawbacks.

Herein, it is proposed to use a camera for sensing, such as such camera in a lighting system. To avoid issues with privacy, the camera may have a fixed focus a few cm in front of the camera. Since people are typically more than a meter away, only very blurry images of people can be generated and privacy can be guaranteed.

In specific embodiments, the "near sighted" camera is hidden behind by a layer or cover with an optical structure (prisms, lenslets, controlled scattering) that scrambles the image even more. This not only emphasizes the privacy aspect, but it also improves the sensitivity of the camera to movement in case the optical structures are made of clear material and are positioned in the focus of the camera. The high resolution also enables a distinction in clusters of pixels that show uncorrelated dynamics, which can be used to count the number of people present and even estimate the speed of movement and deduce the type of activity from that. The cost of a high-resolution smartphone camera is already close to the cost of a 4-pixel PIR sensor. Hence, the present solution may also be cost effective. Further, the present solution may have less issues with distances and may have a larger distance range over which the sensor may sense well, whereas prior art sensors may only sense well over a limited range of distances. Further, the system may sense with relatively high precision while nevertheless not causing an infringement on privacy.

Hence, in a first aspect the invention provides in embodiments a sensor unit ("unit") comprising a (2D) sensor array ("array") having at least 100x100 sensor pixels ("pixels") and a lens system. In other embodiments, the invention provides a sensor unit comprising a (2D) sensor array having at least 100x100 sensor pixels, and a light transmissive sensor window ("window" or "sensor window") comprising optical structures ("structures"). Especially, in embodiments the invention provides a sensor unit comprising a (2D) sensor array having at least 100x100 sensor pixels, a lens system, and a light transmissive sensor window comprising optical structures. In such embodiments, the lens system is configured between the sensor array and light transmissive sensor window. The light transmissive sensor window is configured at a window distance (d) from said (2D) sensor array.

Further, the lens system may especially be configured to provide a nearsighted (2D) sensor array, such as having a sharp focus at distances equal to or less than about 50 cm, such as equal to or less than 25 cm (from the lens system). An object plane and an image plane defined by said lens system have an object-image plane distance (d1) selected from the range of 0.1^{∗}d - 2^{∗}d, such as 0.5^{∗}d - 2^{∗}d, even more especially 0.9^{∗}d - 1.1^{∗}d. In this way, privacy of a person may essentially be guaranteed as the 2D (2D) sensor array essentially focusses on the window, or nearby the window. Further, especially the image plane is configured close to or at the sensor array. Therefore, in specific embodiments the sensor array is configured at the image plane. The image plane may thus coincide with the sensor array. Hence, especially the object plane and the image plane are defined by the lens system and the sensor array, with (thus) especially the sensor array at the image plane. Thereby, also the object plane is defined.

Further, especially the optical structures are configured in a pattern, wherein more especially the optical structures have one or more dimensions selected from length (L), width (W) and diameter (D) selected from the range of 50 µm - 20 mm, and wherein more especially neighboring optical structures shortest distances (d2) selected from the range of 0-50 mm.

Further, the optical structures are selected from the group of dots, facets, pyramids, lines, grooves, lamellae, and lenses.

When the window comprises a transmissive layer, the optical structures may e.g. be provided at one side of the layer, such as the upstream side or the downstream side of such layer. The transmissive layer is herein also indicated as "optical layer". In embodiments, the transmissive layer comprises a (light transmissive) plate. In other embodiments, the transmissive layer comprises a (light transmissive) foil.

As indicated above, such sensor unit may allow sensing with a relatively high precision but without violating privacy rules. For instance, one or more of motion, light, color, human presence, human behavior, etc., may be sensed with said control system as function of the sensor signal from said sensor array.

The sensor unit comprises a (2D) sensor array and one or more of a lens system and a light transmissive sensor window, especially both the lens system and light transmissive sensor window.

The (2D) sensor array may have at least 100x100 sensor pixels. With 100x100 or more pixels the sensor may sense a (moving) object with relatively high precision. Present day smartphone cameras have a much higher resolution. Hence, the number of pixels may be much larger, without much additional costs. Therefore, in specific embodiments the (2D) sensor array has at least 400x400 sensor pixels, like at least 1000x1000 pixels. When technology advances, a higher number of pixels may also be possible. Especially however, the number of pixels is at least 400x400. In embodiments, the (2D) sensor array may be the (2D) sensor array of CCD (semiconductor charge-coupled devices) or CMOS (complementary metal-oxide-semiconductor). Hence, in embodiments the (2D) sensor array may comprise one or more of CCD and CMOS. The (2D) sensor array may be configured to sense one or more of (a) light from the visible spectrum (i.e. one or more wavelengths selected from the range of 380-780 nm) and (b) light from the infrared (i.e. one or more wavelengths selected from e.g. the range of 780-3000 nm, such as e.g. selected from the range of 780-1500 nm). For instance, the (2D) sensor array may have sensitivity in the wavelength range of 700-900 nm. The term "pixel" or "sensor pixel" refers to a single sensor. If no color filter is used, or if all sensors have the same color filter, all pixels are identical. Typically, in camera sensors, the pixels are grouped in triplets of sensors equipped with a red, green and blue color filter, respectively.

Especially, the sensor unit comprises a light transmissive sensor window. This light transmissive sensor window maybe a plate or foil of light transmissive material, which may be planar or may include one or more curvatures relative to a plane of the window.

The light transmissive material may comprise one or more materials selected from the group consisting of a transmissive organic material, such as selected from the group consisting of PE (polyethylene), PP (polypropylene), PEN (polyethylene napthalate), PC (polycarbonate), polymethylacrylate (PMA), polymethylmethacrylate (PMMA) (Plexiglas or Perspex), cellulose acetate butyrate (CAB), silicone, polyvinylchloride (PVC), polyethylene terephthalate (PET), including in an embodiment (PETG) (glycol modified polyethylene terephthalate), PDMS (polydimethylsiloxane), and COC (cyclo olefin copolymer). Especially, the light transmissive material may comprise an aromatic polyester, or a copolymer thereof, such as e.g. polycarbonate (PC), poly (methyl)methacrylate (P(M)MA), polyglycolide or polyglycolic acid (PGA), polylactic acid (PLA), polycaprolactone (PCL), polyethylene adipate (PEA), polyhydroxy alkanoate (PHA), polyhydroxy butyrate (PHB), poly(3-hydroxybutyrate-co-3-hydroxyvalerate) (PHBV), polyethylene terephthalate (PET), polybutylene terephthalate (PBT), polytrimethylene terephthalate (PTT), polyethylene naphthalate (PEN); especially, the light transmissive material may comprise polyethylene terephthalate (PET). Hence, the light transmissive material is especially a polymeric light transmissive material. However, in another embodiment the light transmissive material may comprise an inorganic material. Especially, the inorganic light transmissive material may be selected from the group consisting of glasses, (fused) quartz, transmissive ceramic materials, and silicones. Also hybrid materials, comprising both inorganic and organic parts may be applied. Especially, the light transmissive material comprises one or more of PMMA, PC, or glass. In yet another embodiment, especially when IR sensitivity may be relevant the light transmissive material may especially comprise PE.

In embodiments, the light transmissive sensor window is a closed window, such as a foil or plate. Hence, the layer may be in integral piece of material. In such embodiments, the window essentially consists of light transmissive material. Further, in such embodiments, the window may not include through-openings.

The transmission or light permeability can be determined by providing light at a specific wavelength with a first intensity to the material and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989).

In specific embodiments, a material may be considered transmissive when the transmission of the radiation at a wavelength or in a wavelength range, especially at a wavelength or in a wavelength range of radiation generated by a source of radiation as herein described, through a 1 mm thick layer of the material, especially even through a 5 mm thick layer of the material, under perpendicular irradiation with the visible (or optionally IR) radiation is at least about 20%, such as at least about 30%, such as even at least about 40%, such as at least 50%. The transmission may depend upon one or more of the material of the optical structures, the density, the window material, etc.

In specific embodiments, however, the light transmissive sensor window may include through openings. In such embodiments, the light transmissive sensor window may not essentially consist of light transmissive material, but may (also) comprise non-transmissive material. In such embodiments, transmission may (essentially) be provided by the openings, which may also be indicated as through openings. An example of such light transmissive sensor window may e.g. be a lamella structure (like louvres).

Especially, the light transmissive sensor window is configured at a window distance (d) from said (2D) sensor array. This distance may in embodiments be selected from the range of 0.5-300 mm, such as 1-250 mm, like 5-150 mm. Further, the light transmissive sensor window may be a light transmissive (lighting device) window of a lighting device, as will be further elucidated below.

As indicated above, in further embodiments the sensor unit comprises a lens system. Especially, the lens system may be configured to provide a nearsighted (2D) sensor array as the object-image plane distance is about the distance between the sensor array and the light transmissive window. The terms "object plane" and "image plane" especially refer to the conjugate planes of an imaging system (such as a lens) defined by the property that an object in the object plane has an image in the image plane with the optimum resolution allowed by the optical system. The specific distances of these planes can be calculated for thin lenses with the well-known lens equation, but they can also be determined for more complex imaging systems with calculation software known to people skilled in the art of optical design. The object-image plane distance (d1) is related to the lens system and depends on, e.g. the focal distance and the thickness of the lens system; the sensor window distance is related to the sensor array.

In embodiments, the lens system may include a single lens, like a dome (i.e. dome shaped lens), configured downstream from the 2D array. In specific embodiments, the lens may comprise a plurality of lenses. In yet further embodiments the lens system comprises one or more Fresnel lenses, like a plurality of Fresnel lenses.

The terms "upstream" and "downstream" relate to an arrangement of items or features relative to the direction of sensing from a sensing means (here the especially the sensor(s)), wherein relative to a first position following the direction of sensing (in a direction away) of the sensing means, a second position following the direction of sensing of the sensing means closer to the sensing means than the first position is "upstream" (of the first position), and a third position following the direction of sensing of the sensing means further away from the sensing means (than the first position) is "downstream" (from the first position (and also of the second position)).

Further, especially the sensor window comprises optical structures. The optical structures are configured in a pattern which may be regular or irregular, or a combination of a regular pattern and in irregular pattern. Hence, the term "pattern" may also refer to a plurality of different patterns. Especially, the optical structures are configured in a regular pattern, such as e.g. a cubic or a hexagonal configuration, or a configuration of a plurality of parallel elongated optical structures. In embodiments, the optical structures are light transmissive (see also below). This will especially be the case when the sensor window comprises light transmissive material as in embodiments the optical structures are comprised by the window.

In specific embodiments, the optical structures have one or more dimensions selected from length (L), width (W) and diameter (D) selected from the range of 50 µm - 20 mm. Even more especially, the optical structures have one or more dimensions selected from length (L), width (W) and diameter (D) selected from the range of 100 µm - 2 mm.

In specific embodiments neighboring optical structures have shortest distances (d2) selected from the range of 0 - 50 mm.

In further specific embodiments, neighboring optical structures have shortest distances (d2) selected from the range of 2-50 mm, like 5-50 mm, such as 5- 20 mm. This may especially be relevant in the case of lamellae.

In further specific embodiments, neighboring optical structures have shortest distances (d2) selected from the range of 0-10 mm, such as 0-5 mm, like 0-2 mm. This may especially be relevant in the case of windows with optical structures that are essentially light transmissive, for instance in the case of a micro lens optical (MLO) layer.

In further specific embodiments, neighboring optical structures have shortest distances (d2) selected from the range of 50 µm - 50 mm, like 50 µm - 20 mm. This may especially be relevant in the case of windows with optical structures that are essentially light transmissive or which are not light transmissive, but which are not adjacent, such with through-holes or light transmissive material in between.

The shortest distances can be zero when the optical structures are light transmissive. When the optical structures are not light transmissive, the shortest distances will be larger than zero, such as at least 50 µm, thereby providing space for light transmissive material or a through-hole.

In embodiments, the optical structures are configured in a regular pattern, with the shortest distances selected from the range of 50 µm - 50 mm , especially 50 µm - 20 mm.

In embodiments, a pitch of optical structures may be selected from the range of 50 µm - 50 mm , especially 50 µm - 20 mm.

The term "optical structure" is applied as the optical structures may influence incoming radiation such that a pattern of the radiation is generated on the 2D array. In this way, in a much higher resolution or precision e.g. motion can be sensed. Further, with such dimensions of and distances between the optical structures privacy of a persons may essentially be guaranteed, as the optical structures may inhibit or prevent face recognition. In combination with the nearsighted aspect of the 2D sensor array imposed by the lens system, face recognition may be impossible.

The optical structures are selected from the group of dots, facets, pyramids, lines, grooves, lamellae, and lenses. Especially, the optical structures are selected from the group of dots, facets, pyramids, lines, grooves, and lenses. Such optical structures maybe comprised by the light transmissive sensor window as structures in the window and/or as structures on the window. For instance, dots and lines may be provided on a window, e.g. by screen printing. Grooves may be provided in the window, e.g. by etching. Pyramids, facets and lenses may e.g. be provided by casting a polymer with a suitable mold. Further, such structures may be provided at a downstream side of the window and/or an upstream side of the window.

In specific embodiments, the light transmissive sensor window comprises a light transmissive layer comprising a micro lens array. The micro lens array (or micro lens optics (MLO)) may be better than a diffuser, because the camera lens, which may in embodiments be essentially focused on the window, will see more details (compared to the situation with a diffuser).

In yet other embodiments, the optical structures may comprise lamellae. In such embodiments, a window may comprise a plurality of through-holes between the lamellae.

In specific embodiments, the light transmissive sensor window comprises a light transmissive layer comprising one or more of pyramids with a triangular base, pyramids with a square base, pyramids with a hexagonal base, and conical pyramids.

The sensor system may be used to sense one or more of a light level, presence of people (via motion or via recognition of a human shape), color of light (this may also enable the lighting system to adjust the CCT to the varying daylighting conditions), color of objects (e.g. in a supermarket the color of the goods can be detected and the spectrum adjusted to highlight blue, green, red or yellow for making fish, vegetables, tomatoes/meat or bread look more attractive), activity detection (by combining position/movement and possibly object recognition, or by combining with other sensor input like sound), etc. etc. The presently described sensor may however not be able to recognize a face. Hence, detection of light, light color, object color (but not very specific), motion detection, speed of motion detection (so also a (rough) activity classification), (rough) people counting (more people generate more motion, but they may not be distinguished separately).

In yet a further aspect, the invention also provides a sensor system comprising the sensor unit according to any one of the preceding claims and a control system functionally coupled with said sensor unit, wherein the sensor system is configured to sense (e.g. motion) as function of radiation received by said (2D) sensor array, especially through the light transmissive sensor window. Hence, the sensor unit as described herein may be coupled with a control system for e.g. evaluation of the sensor signal of the (2D) sensor array. The term "sensor signal" may also refer to a plurality of sensor signals, e.g. from different pixels. Herein, the term "control" and similar terms in relation to the control system that is functionally coupled with the sensor unit especially refers to monitoring. Hence, the control system is especially configured to monitor the sensor unit, more especially the (2D) sensor array. The control system receives the sensor signal and may e.g. convert this to information on one or more of the presence of a person, the location of a person, the behavior of a person, etc. etc.

As the pattern on the (2D) sensor array may depend upon the distance of an object to the sensor array, and thus also from the final position of the sensor unit during operation, it may be useful to calibrate the sensor system and/or to allow the sensor system self-learning. Hence, in embodiments the control system comprises one or more of a self-learning algorithm and a calibration procedure for improving sensitivity of the sensor system when installed. The calibration procedure may further include measuring a signal of a light source, such as a light source, configured in different positions in a space where the sensor unit is configured. The interpretation of the image may require maybe calibration input or and/or machine learning algorithms (like neural networks).

The space may be an indoor space or an outdoor space. The term space may for instance relate to a (part of) hospitality area, such as a restaurant, a hotel, a clinic, or a hospital, etc. The term "space" may also relate to (a part of) an office, a department store, a warehouse, a cinema, a church, a theatre, a library, etc. However, the term "space" also relate to (a part of) a working space in a vehicle, such as a cabin of a truck, a cabin of an air plane, a cabin of a vessel (ship), a cabin of a car, a cabin of a crane, a cabin of an engineering vehicle like a tractor, etc. The term "space" may also relate to (a part of) a working space, such as an office, a (production) plant, a power plant (like a nuclear power plant, a gas power plant, a coal power plant, etc.), etc. For instance, the term "space" may also relate to a control room, a security room, etc.

As already indicated above, the sensor unit may be implemented in a lighting device or lighting system. Lighting devices are necessary in many cases, such as indoor situation. Hence, the infrastructure of the lighting may be used to arrange the sensor unit at a location where electricity is anyhow and which location may also be chosen strategically (to provide a good illumination).

Hence, in yet a further aspect the invention provides a lighting system comprising a lighting device configured to provide lighting device light, the lighting system further comprising the sensor unit as defined herein. The sensor unit may be separate from the lighting device. However, in specific embodiments the sensor unit may be comprised by the lighting device. Moreover, as the lighting device may include a light exit window (light transmissive lighting device window) that may also be used as light transmissive sensor window, the sensor unit may especially be comprised by the lighting device. Hence, in embodiments the lighting device further comprises a light exit window, wherein said sensor unit is configured upstream of said light exit window (and thus sensing may be done through the light exit window and the light transmissive sensor window). Even more especially, the light exit window comprises said light transmissive sensor window (and thus sensing may be done through the light exit window which is or comprises the light transmissive sensor window).

For instance, the sensor unit may be functionally coupled with a control system (see also above). Hence, in embodiments the lighting system further comprises a control system functionally coupled with said sensor unit, wherein the lighting system is further configured to sense (e.g. motion) as function of radiation from external of said lighting device received by said sensor array through said light transmissive sensor window. Further, the lighting device may (also) be functionally coupled with the control system. Hence, the control system may also control the light generated by the lighting device. Here, the term "control" and similar terms in combination with the lighting device and the control system may especially refer to determining the behavior or supervising the running of the lighting device, more especially the lighting device light generated thereby.

Further, in yet an aspect the invention also provides a method of sensing, e.g. motion, with the sensor system or the lighting system as defined herein, the method comprising detecting radiation from external of said sensor unit or said lighting device with said sensor array and sensing, e.g. motion, with said control system as function of a sensor signal from said sensor array. Especially, the method may comprise sensing changes in radiation patterns on said sensor array. The method may amongst others be used for sensing, one or more of motion, light, color, human presence, human behavior, etc. These maybe sensed with said control system as function of the sensor signal from said sensor array.

Especially, the sensor system or the lighting system as defined herein may be used for sensing (in high resolution) motion while preventing face recognition.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1a-1b schematically depict a number of embodiments and variants;
Fig. 2 schematically depicts a number of embodiments and variants in more detail.
Figs. 3a-3e schematically depicts some (comparative) results;
Figs. 4a-4c schematically depict some further variants and embodiments.

The schematic drawings are not necessarily on scale.

### DETAILED DESCRIPTION OF THE EMBODIMENTS

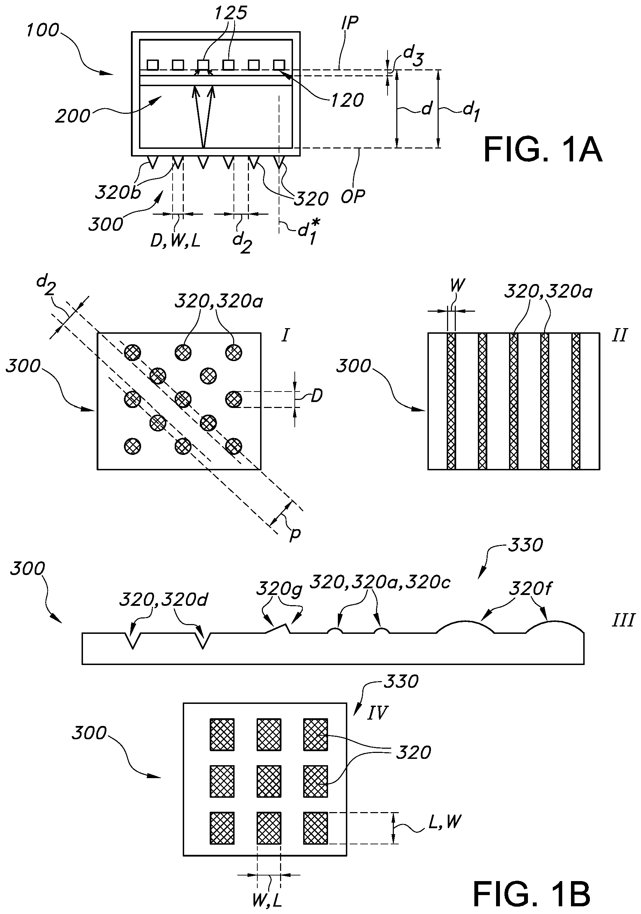

Fig. 1a schematically depicts an embodiment of a sensor unit 100 comprising a sensor array 120 having at least 100x100 sensor pixels 125, though this is shown in a very simplified version with only 6 pixels by way of example. Further, an optional lens system 200 is schematically depicted. Also an optional light transmissive sensor window 300 comprising optical structures 320 is schematically depicted.

The light transmissive sensor window 300 is configured at a window distance d from said sensor array 120. The lens system 200 is configured to provide an object-image plane distance d1 selected from the range of 0.1^{∗}d ^ -2^{∗}d such as especially 0.9^{∗}d - 1.1^{∗}d. Reference IP indicates the image plane, here coinciding with the 2D sensor array 120, and reference OP indicates the object plane, here by way of example essentially coinciding with the light transmissive sensor window 300. However, the object plane may also be upstream of this window 300 or downstream thereof (but relatively close to the sensor window 300).

The optical structures 320 are configured in a pattern, wherein the optical structures 320 have one or more dimensions selected from length L, width W and diameter D, and may have values selected from the range of 50 µm - 20 mm. Further, neighboring optical structures 320 may have shortest distances d2 selected from the range of 0-50 mm. By way of example, the optical structures have the shape of pyramids 320b.

Fig. 1a indicates with the dashed line d1* the object-image plane distances that may be chosen, from the object plane very close to the lens system 200, but still upstream of the optional window 300, until about 50 cm away from the sensor array 120, which may be downstream from the optional window 300. Reference d3 indicates the distance between the pixels 125 and the lens system. This distance may essentially be 0 mm, but may optionally be a few mm, such as in the range of 0.2-20 mm. The lens system may comprise a single lens or a plurality of lenses.

Fig. 1b very schematically depict some embodiments and variants wherein the optical structures (320) are selected from the group of dots 320a (variants I, III), lines 320c (variants II,III), grooves 320d (variant III), lenses 320f (variant III), facets 320g (variant III, but pyramids in fact also comprises facets). The pitch between the optical structures is indicated with reference p. variant III is a fictive variant, only used to show a number of different optical structures. Note that as this Fig. is a cross section, the dots maybe dots or lines. Variant IV again shows other variants, such as e.g. cubic, tetrahedral or other type of structures that may have a (base) width W and a (base) length L. Note that L and W can be used for different dimension. Attributing L to one dimension may imply to attribute W to another dimension.

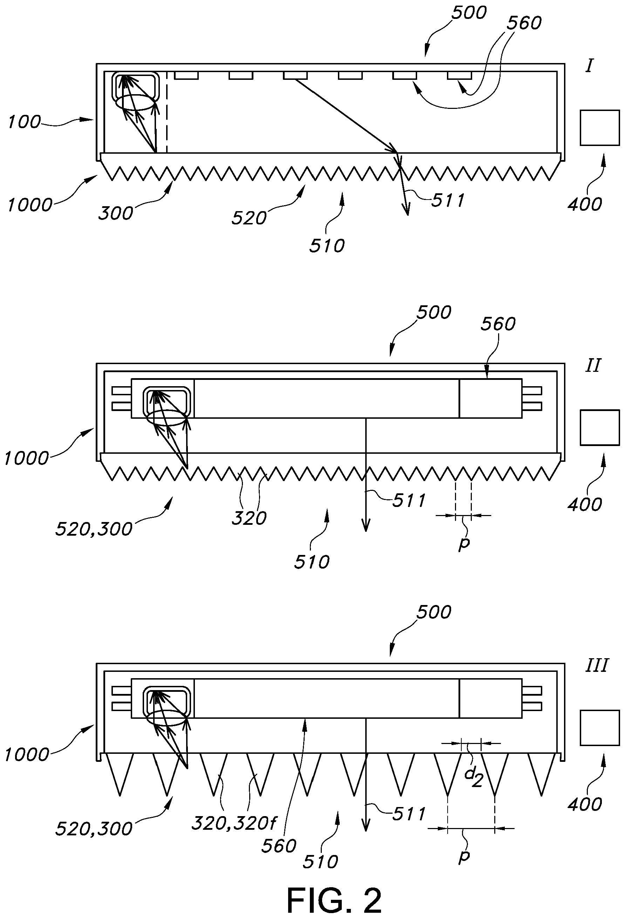

Fig. 2 schematically also depicts a number of embodiments and variants. The near sighted camera is either integrated in a luminaire, or in a lamp that is to be used inside a luminaire. The camera is focused on the position of the exit window of the luminaire, which may be an optical layer containing prisms, pyramids, cones, lenslets, or a controlled diffuser (with limited scattering angle).

The camera may also sense the light from the luminaire itself, but that should be easy to filter out with a frequency filter. In an embodiment, the camera may be located in a separate compartment to avoid interference with light from the luminaire itself. Hence, in variant I the dashed line indicates the two options.

Fig. 2 thus also shows embodiments and variants (I, II, and III) of a lighting system 500 comprising a lighting device 510 configured to provide lighting device light 511, the lighting system 500 further comprising the sensor unit 100. In fact, hereby also embodiments and variants of a sensor system 1000 comprising the sensor unit 100 according to any one of the preceding claims and a control system 400 functionally coupled with said sensor unit 100, wherein the sensor system 1000 is configured to sense e.g. motion as function of radiation received by said sensor array 120 through said light transmissive sensor window 300. The control system 400 may also be integrated in the lighting device 510. These embodiments and variants also show variants wherein the lighting device 510 further comprises a light exit window 520, wherein said sensor unit 100 is configured upstream of said light exit window 520. More precisely, the light exit window 520 comprises said light transmissive sensor window 300. Reference 560 indicates a light source, such as a solid state light source, a fluorescent lamp, etc.

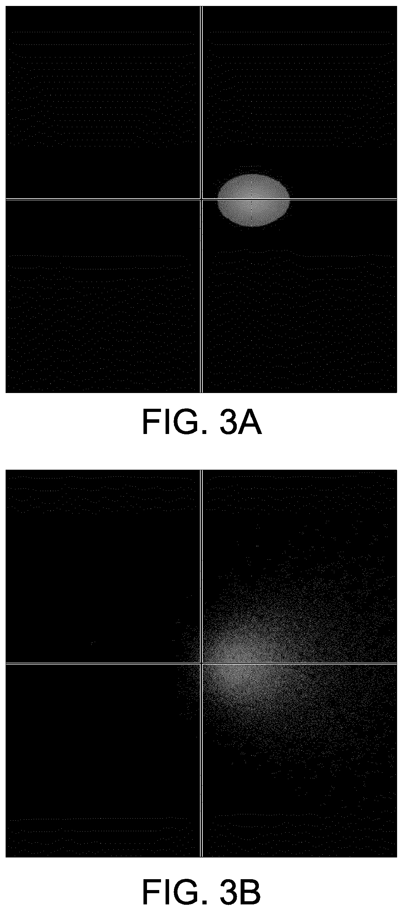

In the image in Fig. 3a the image of a point source at 1 m distance is shown in case there is no optical layer (such as a light transmissive window with optical structures configured in a pattern as described herein). The point is blurred a lot because the lens is focusing at 2 cm and not at 1 m. Still, movement of the point can be detected. The point source is at 1 m distance and 0.5 m off-axis.

When a diffuse optical layer is placed in between the point and the camera, the following images are observed. In the case of Gaussian scattering (scattering within a limited angular range), the point image is even more blurred than in the case without layer, but some movement may still be visible, see Fig. 3b.

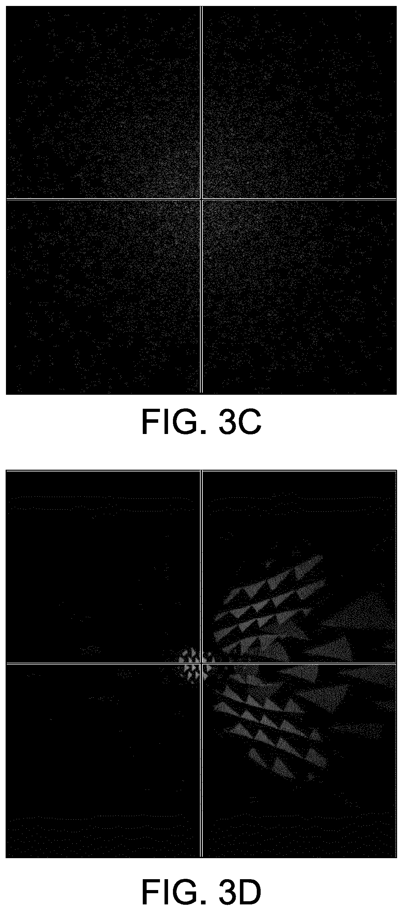

When the optical layer has Lambertian scattering properties (scattering in all directions, independent of the incoming direction), the image contains no information at all and it does not change when the point moves. So the camera cannot be used for detecting movement behind a strong scattering optical layer (can still be used to detect light though), see Fig. 3c.

Often, luminaires contain optical layers containing lenslets (i.e. a small lens), pyramids, or cones for either hiding the source or shaping the beam and controlling the glare. In. Fig. 3d, we show examples of the image of a point seen on such an optical layer for square pyramids. Similar results (but other patterns) may be received for so-called MLO (micro lens optics: small indented cones) structures. The clear optical structures create a point source response that contains a pattern of sharply delineated structures. These structures mask the details of the image, which is good for privacy, but they are very sensitive to movement, which is good for presence detection. The use of such images in presence detection with cameras is an essential part of our invention.

To test the movement sensitivity of various optical layouts (no layer vs diffuser vs clear optical layer), we calculated the "camera" image of a model face at 1 m distance. The model face is an emitting disk (20 cm diameter) facing the camera with three black areas to draw two eyes and a mouth.

Without optical layer, the face image is blurred to a disk of light, see below. If the face moves 5 cm, the image also slightly moves. So such a movement may be detectable, but the correlation between the two images is still high (0.9) because the images contain largely the same information (very much overlapping disks). Therefore, to detect such a movement against a background of other objects and with other sources of noise may not be feasible. When a Gaussian scattering layer is used, the images are blurred more. Surprisingly, the correlation between the reference image and the image of the 5 cm displace face is slightly lower (0.83). When the face is moved 20 cm, the correlation becomes 0.63. If we now consider the case of the optical layer containing pyramids, we notice that the face image is completely unrecognizable, but it does still contain small features. Moving the face by 5 cm shifts those small features and the correlation with the reference image is only 0.64, i.e. comparable to the correlation of the 20 cm shifted image in case a Gaussian diffuser is used. The pyramid optics layer is therefore much more sensitive to small movements than a Gaussian diffuser layer (and also more sensitive than the situation without layer). We have found the best result for the MLO layer: a correlation of 0.49 after a 5 cm displacement.

Depending on the type of implementation, the optical layer and therefore the point response of the imaging system may be known (e.g. in case it is implemented directly in a luminaire or as a standalone unit) or it may depend on the application (in case it is embedded in a lamp and we don't know the luminaire it will be placed in).

To improve the sensitivity of the sensor, the point response may be implemented in the software filters during manufacturing, or it may be obtained through a calibration procedure (e.g. measure the response in a dark room by using a laser pointer from different locations), or it may be obtained by a self-learning algorithm during operation.

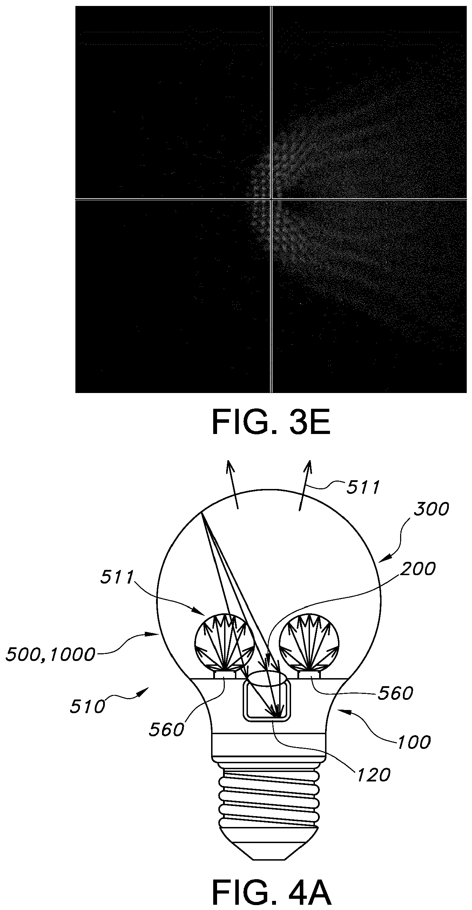

Figs. 3d and 3e show results of a sensor unit comprising a sensor array having at least 100x100 sensor pixels, a fixed focus lens system, and a light transmissive sensor window comprising optical structures, wherein the light transmissive sensor window is configured at a window distance from said sensor array, wherein the lens system is configured between the sensor array and said sensor window, and wherein an object plane and an image plane defined by said lens system and sensor array have an object-image plane distance selected from the range of 0.1^{∗}d - 2^{∗}d, wherein the optical structures are configured in a pattern, wherein the optical structures have one or more dimensions selected from length, width and diameter selected from the range of 50 µm - 20 mm, and wherein neighboring optical structures have shortest distances selected from the range of 0-50 mm.

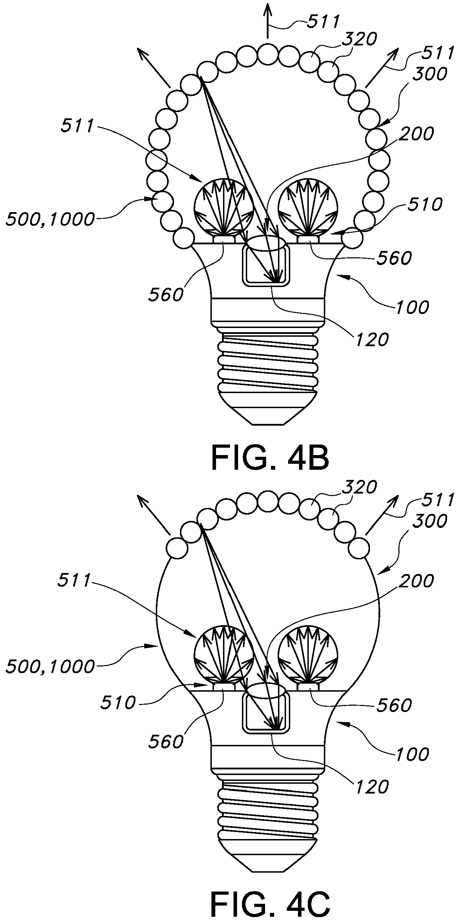

In a further set of embodiments, the camera may be integrated inside a lamp, with the focus on the envelope of the lamp. This is schematically depicted in Figs. 4a-4c. Fig. 4a shows the sensor unit integrated in a bulb, using controlled scattering or a partly transparent envelope. Fig. 4b shows the sensor unit also integrated in the bulb with optical structures in or on the bulb window, such as lenslets or facets. Fig. 4c schematically depicts a similar variant but now only part of the bulb window comprises the optical structures. Note that when the window is essentially fully covered with optical structures with mutual distances of neighboring structures essentially zero, the structures are transmissive for radiation, such as visible and/or infrared variation, especially transparent.

In yet a further set of embodiments, the camera sensor may be used as a standalone sensor, connected to a lighting system (wireless or wired). The camera maybe used without cover (but near-sighted to avoid face recognition) or with a cover, similar to the covers used in previous embodiments.

## Claims

1. A sensor unit (100) comprising a sensor array (120) having at least 100x100 sensor pixels (125), a fixed focus lens system (200), and a light transmissive sensor window (300) comprising optical structures (320), wherein the light transmissive sensor window (300) is configured at a window distance d from said sensor array (120), wherein the lens system (200) is configured between the sensor array (120) and said sensor window (300), and wherein an object plane (OP) and an image plane (IP) defined by said lens system (200) and sensor array (120) have an object-image plane distance d1 selected from the range of 0.1^{∗}d - 2^{∗}d, wherein the optical structures (320) are configured in a pattern, wherein the optical structures (320) have one or more dimensions selected from length (L), width (W) and diameter (D) selected from the range of 50 µm - 20 mm, and wherein neighboring optical structures (320) have shortest distances (d2) selected from the range of 0-50 mm; wherein the lens system (200) is configured to provide said object-image plane d1 selected from the range of 0.1 ^{∗}d - 2^{∗}d, and wherein said image plane (IP) coincides with the sensor array (120);
wherein the optical structures (320) are selected from the group of dots (320a), facets (320g), pyramids (320b), lines (320c), grooves (320d), lamellae (320e), and lenses (320f).

2. The sensor unit (100) according to claim 1, wherein the lens system (200) is configured to provide said object-image plane d1 selected from the range of 0.9^{∗}d - 1.1^{∗}d, and wherein said image plane (IP) coincides with the sensor array (120).

3. The sensor unit (100) according to any one of the preceding claims, wherein the optical structures (320) are configured in a regular pattern, wherein the optical structures (320) have one or more dimensions selected from length (L), width (W) and diameter (D) selected from the range of 100 µm - 2 mm, wherein neighboring optical structures (320) have shortest distances (d2) selected from the range of 0-2 mm, and wherein the sensor array (120) has at least 400x400 sensor pixels (125).

4. The sensor unit (100) according to any one of the preceding claims, wherein the optical structures (320) comprise lamellae (320e) having shortest distances (d2) selected from the range of 5-20 mm.

5. The sensor unit (100) according to any one of the preceding claims, wherein the sensor array (120) comprises one or more of a CCD and a CMOS, and wherein the light transmissive sensor window (300) comprises a light transmissive layer (330) comprising a micro lens array.

6. A sensor system (1000) comprising the sensor unit (100) according to any one of the preceding claims and a control system (400) functionally coupled with said sensor unit (100), wherein the sensor system (1000) is configured to sense as function of radiation received by said sensor array (120) through said light transmissive sensor window (300).

7. The sensor system (1000) according to claim 6, wherein the control system (400) comprises one or more of a self-learning algorithm and a calibration procedure for improving sensitivity of the sensor system (1000) when installed.

8. A lighting system (500) comprising a lighting device (510) configured to provide lighting device light (511), the lighting system (500) further comprising the sensor unit (100) according to any one of the preceding claims 1-5.

9. The lighting system (500) according to claim 8, wherein the lighting device (510) further comprises a light exit window (520), wherein said sensor unit (100) is configured upstream of said light exit window (520).

10. The lighting system (500) according to claim 9, wherein said light exit window (520) comprises said light transmissive sensor window (300).

11. The lighting system (500) according to any one of the preceding claims 8-10, wherein the lighting system (500) further comprises a control system (400) functionally coupled with said sensor unit (100), wherein the lighting system (500) is further configured to sense as function of radiation from external of said lighting device (510) received by said sensor array (120) through said light transmissive sensor window (300).

12. A method of sensing with the sensor system (1000) according to any one of the preceding claims 6-7 or the lighting system (500) according to claim 11, the method comprising detecting radiation from external of said sensor unit (100) or said lighting device (510) with said sensor array (120) and sensing one or more of motion, light, color, human presence, human behavior with said control system (400) as function of a sensor signal from said sensor array (120).

13. The method according to claim 12, wherein the method comprises sensing changes in radiation patterns on said sensor array (120).

14. Use of the sensor system (1000) according to any one of the preceding claims 6-7 or the lighting system (500) according to claim 11 for sensing motion while preventing face recognition.

## Patentansprüche

1. Sensoreinheit (100) umfassend eine Sensoranordnung (120) mit mindestens 100 x 100 Sensorpixeln (125), ein Linsensystem mit festem Fokus (200) und ein lichtdurchlässiges Sensorfenster (300) umfassend optische Strukturen (320), wobei das lichtdurchlässige Sensorfenster (300) in einem Fensterabstand von der Sensoranordnung (120) konfiguriert ist, wobei das Linsensystem (200) zwischen der Sensoranordnung (120) und dem Sensorfenster (300) konfiguriert ist und wobei eine Objektebene (OP) und eine Bildebene (IP), die durch das Linsensystem (200) und die Sensoranordnung (120) definiert sind, einen Objekt-Bildebenen-Abstand aufweisen, der aus dem Bereich von 0,1^{∗}d bis 2^{∗}d ausgewählt ist, wobei die optischen Strukturen (320) in einem Muster konfiguriert sind, wobei die optischen Strukturen (320) eine oder mehrere Abmessungen aufweisen, die aus Länge (L), Breite (W) und Durchmesser (D) ausgewählt sind, der ausgewählt ist aus dem Bereich von 50 µm bis 20 mm, und wobei benachbarte optische Strukturen (320) kürzeste Abstände (d2) aufweisen, die ausgewählt sind aus dem Bereich von 0 bis 50 mm; wobei das Linsensystem (200) konfiguriert ist, die Objekt-Bildebene bereitzustellen, die ausgewählt ist aus dem Bereich von 0,1^{∗}d bis 2 ^{∗}d, und wobei die Bildebene (IP) mit der Sensoranordnung (120) zusammenfällt;
wobei die optischen Strukturen (320) aus der Gruppe von Punkten (320a), Facetten (320g), Pyramiden (320b), Linien (320c), Rillen (320d), Lamellen (320e) und Linsen (320f) ausgewählt sind.

2. Sensoreinheit (100) nach Anspruch 1, wobei das Linsensystem (200) konfiguriert ist, die Objekt-Bildebene bereitzustellen, die aus dem Bereich von 0,9 ^{∗}d bis 1,1^{∗}d ausgewählt ist, und wobei die Bildebene (IP) mit der Sensoranordnung (120) übereinstimmt.

3. Sensoreinheit (100) nach einem der vorstehenden Ansprüche, wobei die optischen Strukturen (320) in einem regelmäßigen Muster konfiguriert sind, wobei die optischen Strukturen (320) eine oder mehrere Abmessungen aufweisen, die ausgewählt sind aus Länge (L), Breite (W) und Durchmesser (D), der ausgewählt aus dem Bereich von 100 µm bis 2 mm, wobei benachbarte optische Strukturen (320) kürzeste Abstände (d2) aufweisen, die ausgewählt sind aus dem Bereich von 0 bis 2 mm, und wobei die Sensoranordnung (120) mindestens 400 x 400 Sensorpixel (125) aufweist.

4. Sensoreinheit (100) nach einem der vorstehenden Ansprüche, wobei die optischen Strukturen (320) Lamellen (320e) mit kürzesten Abständen (d2) umfassen, die ausgewählt sind aus dem Bereich von 5 bis 20 mm.

5. Sensoreinheit (100) nach einem der vorstehenden Ansprüche, wobei die Sensoranordnung (120) eine oder mehrere von einem CCD und einem CMOS umfasst und wobei das lichtdurchlässige Sensorfenster (300) eine lichtdurchlässige Schicht (330) umfasst, die eine Mikrolinsenanordnung umfasst.

6. Sensorsystem (1000), umfassend die Sensoreinheit (100) nach einem der vorstehenden Ansprüche und ein Steuersystem (400), das funktional mit der Sensoreinheit (100) gekoppelt ist, wobei das Sensorsystem (1000) konfiguriert ist, in Abhängigkeit von Strahlung zu erfassen, die von der Sensoranordnung (120) durch das lichtdurchlässige Sensorfenster (300) empfangen wird.

7. Sensorsystem (1000) nach Anspruch 6, wobei das Steuersystem (400) einen oder mehrere eines selbstlernenden Algorithmus und eines Kalibrierungsverfahrens zur Verbesserung der Empfindlichkeit des Sensorsystems (1000) bei Installation umfasst.

8. Beleuchtungssystem (500), umfassend eine Beleuchtungsvorrichtung (510), die konfiguriert ist, Beleuchtungsvorrichtungslicht (511) bereitzustellen, wobei das Beleuchtungssystem (500) weiterhin die Sensoreinheit (100) nach einem der vorstehenden Ansprüche 1 bis 5 umfasst.

9. Beleuchtungssystem (500) nach Anspruch 8, wobei die Beleuchtungsvorrichtung (510) weiterhin ein Lichtaustrittsfenster (520) umfasst, wobei die Sensoreinheit (100) stromaufwärts des Lichtaustrittsfensters (520) konfiguriert ist.

10. Beleuchtungssystem (500) nach Anspruch 9, wobei das Lichtaustrittsfenster (520) das lichtdurchlässige Sensorfenster (300) umfasst.

11. Beleuchtungssystem (500) nach einem der vorstehenden Ansprüche 8 bis 10, wobei das Beleuchtungssystem (500) weiterhin ein Steuersystem (400) umfasst, das funktionell mit der Sensoreinheit (100) gekoppelt ist, wobei das Beleuchtungssystem (500) weiterhin konfiguriert ist, in Abhängigkeit von Strahlung von außerhalb der Beleuchtungsvorrichtung (510) zu erfassen, die von der Sensoranordnung (120) durch das lichtdurchlässige Sensorfenster (300) empfangen wird.

12. Verfahren zum Erfassen mit dem Sensorsystem (1000) nach einem der vorstehenden Ansprüche 6 bis 7 oder dem Beleuchtungssystem (500) nach Anspruch 11, wobei das Verfahren das Erkennen von Strahlung von außerhalb der Sensoreinheit (100) oder der Beleuchtungsvorrichtung (510) mit der Sensoranordnung (120) und das Erfassen eines oder mehrerer von Bewegungen, Licht, Farbe, menschlicher Anwesenheit, menschlichem Verhalten mit der Steuersystem (400) in Abhängigkeit eines Sensorsignals von der Sensoranordnung (120) umfasst.

13. Verfahren nach Anspruch 12, wobei das Verfahren das Erfassen von Änderungen von Strahlungsmustern an der Sensoranordnung (120) umfasst.

14. Verwendung des Sensorsystems (1000) nach einem der vorstehenden Ansprüche 6 bis 7 oder des Beleuchtungssystems (500) nach Anspruch 11 zum Erfassen einer Bewegung unter Verhinderung einer Gesichtserkennung.

## Revendications

1. Unité de capteur (100) comprenant un réseau de capteurs (120) présentant au moins 100 x 100 pixels de capteur (125), un système de lentille à mise au point fixe (200), et une fenêtre de capteur de transmission de lumière (300) comprenant des structures optiques (320), dans laquelle la fenêtre de capteur de transmission de lumière (300) est configurée à une distance de fenêtre d dudit réseau de capteurs (120), dans laquelle le système de lentille (200) est configuré entre le réseau de capteurs (120) et ladite fenêtre de capteur (300), et dans laquelle un plan d'objet (OP) et un plan d'image (IP) définis par lesdits système de lentille (200) et réseau de capteurs (120) présentent une distance de plan image-objet d1 choisie à partir de la plage de 0,1^{∗}d à 2 ^{∗}d, dans laquelle les structures optiques (320) sont configurées selon un motif, dans laquelle les structures optiques (320) présentent une ou plusieurs dimensions choisies parmi une longueur (L), une largeur (W) et un diamètre (D) choisis à partir de la plage de 50 µ à 20 mm, et dans laquelle des structures optiques voisines (320) présentent les plus courtes distances (d2) choisies à partir de la plage de 0 à 50 mm ;
dans laquelle le système de lentille (200) est configuré pour fournir ledit plan objet-image d1 choisi à partir de la plage de 0,1^{∗}d à 2 ^{∗}d, et dans laquelle ledit plan d'image (IP) coïncide avec le réseau de capteurs (120) ;
dans laquelle les structures optiques (320) sont choisies dans le groupe des points (320a), des facettes (320g), des pyramides (320b), des lignes (320c), des rainures (320d), des lamelles (320e), et des lentilles (320f).

2. Unité de capteur (100) selon la revendication 1, dans laquelle le système de lentille (200) est configuré pour fournir ledit plan objet-image d1 choisi à partir de la plage de 0,9 ^{∗}d à 1,1^{∗}d, et dans laquelle ledit plan d'image (IP) coïncide avec le réseau de capteurs (120).

3. Unité de capteur (100) selon l'une quelconque des revendications précédentes, dans laquelle les structures optiques (320) sont configurées selon un motif régulier, dans laquelle les structures optiques (320) présentent une ou plusieurs dimensions choisies parmi une longueur (L), une largeur (W) et un diamètre (D) choisis à partir de la plage de 100 µ à 2 mm, dans laquelle les structures optiques voisines (320) présentent les plus courtes distances (d2) choisies à partir de la plage de 0 à 2 mm, et dans laquelle le réseau de capteurs (120) présente au moins 400 x 400 pixels de capteur (125).

4. Unité de capteur (100) selon l'une quelconque des revendications précédentes, dans laquelle les structures optiques (320) comprennent des lamelles (320e) présentant les plus courtes distances (d2) choisies à partir de la plage de 5 à 20 mm.

5. Unité de capteur (100) selon l'une quelconque des revendications précédentes, dans laquelle le réseau de capteurs (120) comprend un ou plusieurs parmi un CCD et un CMOS, et dans laquelle la fenêtre de capteur de transmission de lumière (300) comprend une couche de transmission de lumière (330) comprenant un réseau de microlentilles.

6. Système de capteur (1000) comprenant l'unité de capteur (100) selon l'une quelconque des revendications précédentes et un système de commande (400) couplé de manière fonctionnelle avec ladite unité de capteur (100), dans lequel le système de capteur (1000) est configuré pour capter en tant que fonction de rayonnement reçue par ledit réseau de capteurs (120) à travers ladite fenêtre de capteur de transmission de lumière (300).

7. Système de capteur (1000) selon la revendication 6, dans lequel le système de commande (400) comprend un ou plusieurs parmi un algorithme d'autoapprentissage et une procédure de calibrage destinée à améliorer la sensibilité du système de capteur (1000) lorsqu'il est installé.

8. Système lumineux (500) comprenant un dispositif d'éclairage (510) configuré pour fournir de la lumière de dispositif d'éclairage (511), le système d'éclairage (500) comprenant en outre l'unité de capteur (100) selon l'une quelconque des revendications précédentes 1 à 5.

9. Système d'éclairage (500) selon la revendication 8, dans lequel le dispositif d'éclairage (510) comprenant en outre une fenêtre de sortie de lumière (520), dans lequel ladite unité de capteur (100) est configurée en amont de ladite fenêtre de sortie de lumière (520).

10. Système d'éclairage (500) selon la revendication 9, dans lequel ladite fenêtre de sortie de lumière (520) comprend ladite fenêtre de capteur de transmission de lumière (300).

11. Système d'éclairage (500) selon l'une quelconque des revendications précédentes 8 à 10, dans lequel le système d'éclairage (500) comprend en outre un système de commande (400) couplé de manière fonctionnelle avec ladite unité de capteur (100), dans lequel le système d'éclairage (500) est configuré en outre pour capter en tant que fonction de rayonnement à partir de l'extérieur dudit dispositif d'éclairage (510) reçu par ledit réseau de capteurs (120) à travers ladite fenêtre de capteur de transmission de lumière (300).

12. Procédé consistant à capter avec le système de capteur (1000) selon l'une quelconque des revendications précédentes 6 à 7 ou le système d'éclairage (500) selon la revendication 11, le procédé comprenant le fait de capter un rayonnement à partir de l'extérieur de ladite unité de capteur (100) ou dudit dispositif d'éclairage (510) avec ledit réseau de capteurs (120) et le fait de capter un ou plusieurs parmi un mouvement, une lumière, une couleur, une présence humaine, un comportement humain avec ledit système de commande (400) en tant que fonction d'un signal de capteur à partir dudit réseau de capteurs (120).

13. Procédé selon la revendication 12, dans lequel le procédé comprend le fait de capter des changements dans les motifs de rayonnement sur ledit réseau de capteurs (120).

14. Utilisation du système de capteur (1000) selon l'une quelconque des revendications précédentes 6 à 7 ou système d'éclairage (500) selon la revendication 11 destiné(e) à capter un mouvement tout en empêchant la reconnaissance faciale.
